# EUROPÄISCHE PATENTANMELDUNG

(11) **EP 4 596 139 A1**
(43) Veröffentlichungstag der Anmeldung: **06.08.2025**
(21) Anmeldenummer: 24155314.8
(22) Anmeldetag: 01.02.2024
(51) Int. Cl.: B22C 9/10, B22C 21/14, B28B 1/00, B33Y 10/00, B33Y 80/00

(54) **VERFAHREN ZUM HERSTELLEN EINES KERNS EINER GUSSFORM FÜR EIN BAUTEIL, VERFAHREN ZUM HERSTELLEN EINES BAUTEILS, UND KERN FÜR EINE GUSSFORM**

(71) Anmelder: voestalpine Giesserei Linz GmbH, 4020 Linz (AT)
(72) Erfinder: STARZER, Andreas, 4020 Linz (AT)
(74) Vertreter: Bratovic, Nino Maria

(57) **Zusammenfassung**

Die Erfindung schafft ein Verfahren zum Herstellen eines Kerns (100) einer Gussform für ein Bauteil (1), ein Verfahren zum Herstellen eines Bauteils, und einen Kern für eine Gussform. Das Verfahren zum Herstellen des Kerns umfasst zumindest die Schritte:
- Bereitstellen einzelner Kernelemente (110, 112) des Kerns (100), welche zusammengesetzt dem herzustellenden Kern (100) entsprechen, wobei die einzelnen Kernelemente (110, 112) zumindest ein Zentralelement (110), welches einen räumlich zentralen Bereich des Kerns (100) enthält, und mehrere Randelemente (112) umfassen,

wobei die Kernelemente (110, 112) Tunnelstrukturen (106) aufweisen, die an Schnittstellen (105) zwischen zwei Kernelementen (110, 112) miteinander derart korrespondieren, dass eine jeweilige Armierungsstruktur (140) aus mindestens einem Armierungselement (141, 142) über die jeweilige Schnittstelle (105) hinweg in den Tunnelstrukturen (106) anordenbar ist; und
Verbinden der Randelemente (112) mit dem Zentralelement (110) und miteinander zum Herstellen des Kerns (100), umfassend Anordnen und Befestigen einer Armierungsstruktur (141, 142) in miteinander korrespondierenden Tunnelstrukturen (106) von mindestens zwei Kernelementen (110, 112).

## Beschreibung

### Technisches Gebiet

Die vorliegende Erfindung betrifft ein Verfahren zum Herstellen eines Kerns einer Gussform für ein Bauteil, ein Verfahren zum Herstellen eines Bauteils in einem Gussverfahren, einen Kern für eine Gussform, das Verwenden eines Kerns zum Herstellen eines Bauteils in einem Gussverfahren, sowie ein Computerprogrammprodukt, ein Datenspeichermedium und einen Datenstrom. Bei dem Bauteil kann es sich insbesondere um ein großformatiges Bauteil handeln, sodass sich der Kern einer Gussform dafür mittels herkömmlicher Techniken nicht ohne Weiteres herstellen lässt.

### Technischer Hintergrund

Additive Fertigungsverfahren finden Anwendung auf immer mehr technische Bereiche. Während sie sich für manche Produkte sehr gut eignen, gibt es immer noch andere Produkte, in denen klassische Produktionsverfahren Vorteile haben. Insbesondere muss eine additive Fertigungsanlage stets größer sein als das mit ihr herzustellende Produkt, was gerade bei sehr großen Bauteilen oft einen entsprechend noch größeren Aufwand erfordert.

Im Gegensatz dazu sind beispielsweise Gussverfahren, insbesondere Stahlgussverfahren, gut dafür geeignet, großformatige Bauteile wie etwa Turbinen oder Impeller für Kraftwerke zu erzeugen. Dafür werden allerdings entsprechende Gussformen benötigt, die meist einen Kern und eine Kernmarke umfassen, die üblicherweise etwa genauso groß, oder sogar größer, sind als das herzustellende Bauteil selbst.

Insbesondere der Kern ist naturgemäß genauso komplex wie sein Negativ, das herzustellende Bauteil selbst. Prinzipiell ließen sich die Vorteile der additiven Fertigung nutzen, um den Kern herzustellen, wobei hier die Größe des Kerns eine Schwierigkeit darstellt.

In der Druckschrift CN 115319021 ist ein Verfahren zum Erzeugen von großformatigen Stahlgussformen mittels 3D-Sanddrucks beschrieben. Problematisch ist hier jedoch die Verbindung mehrerer Elemente einer Stahlgussform aus gedrucktem Sand derart, dass sie den enormen Belastungen während des Gusses standhält.

### Zusammenfassung der Erfindung

Es ist daher eine Aufgabe der vorliegenden Erfindung, ein Verfahren zum Herstellen eines Kerns einer Gussform für ein (insbesondere großformatiges) Bauteil bereitzustellen, das in einem stabilen Kern resultiert. Weitere Aufgaben sind es, ein verbessertes Verfahren zum Herstellen eines (insbesondere großformatigen) Bauteils in einem Gussverfahren bereitzustellen, einen verbesserten Kern für eine Gussform bereitzustellen, eine Verwendung eines verbesserten Kerns zum Herstellen eines (insbesondere großformatigen) Bauteils in einem Gussverfahren bereitzustellen, sowie ein verbessertes Computerprogrammprodukt, ein verbessertes Datenspeichermedium und einen verbesserten Datenstrom bereitzustellen.

Diese Aufgaben werden durch die Gegenstände der unabhängigen Patentansprüche sowie die beschriebenen Aspekte der vorliegenden Erfindung gelöst.

Dementsprechend wird ein Verfahren zum Herstellen eines Kerns einer Gussform für ein - insbesondere großformatiges - Bauteil bereitgestellt, umfassend zumindest die Schritte:
- Bereitstellen einzelner Kernelemente des Kerns, welche zusammengesetzt im Wesentlichen oder genau dem herzustellenden Kern entsprechen, wobei die einzelnen Kernelemente zumindest umfassen:
   - ein Zentralelement, welches einen räumlich zentralen Bereich des Kerns enthält; und
   - mehrere Randelemente, welche dazu ausgelegt sind, an dem Zentralelement angeordnet und mit dem Zentralelement verbunden zu werden,

wobei die Kernelemente zumindest teilweise (oder alle) Tunnelstrukturen aufweisen, die zumindest teilweise (oder überall) an Schnittstellen zwischen zwei Kernelementen miteinander derart korrespondieren, dass eine jeweilige Armierungsstruktur aus mindestens einem Armierungselement über die jeweilige Schnittstelle hinweg in den Tunnelstrukturen anordenbar ist; und
Verbinden der Randelemente mit dem Zentralelement und zumindest teilweise miteinander zum Herstellen des Kerns, umfassend Anordnen und Befestigen mindestens einer Armierungsstruktur in miteinander korrespondierenden Tunnelstrukturen von mindestens zwei Kernelementen.

Es ist somit eine grundlegende Idee der vorliegenden Erfindung, dass der Kern nicht einfach der Reihe nach, mosaikartig, in Teile unterteilt wird, die separat additiv gefertigt werden und dann aneinander geklemmt werden. Stattdessen wird der Kern in ein Zentralelement und mehrere Randelemente unterteilt, und eine Verbindung mittels korrespondierender Tunnelstrukturen vorbereitet, in je zwei von denen dann mindestens eine Armierungsstruktur angeordnet werden kann.

Eine Gussform umfasst typischerweise ein Gussform-Unterteil, ein Gussform-Oberteil, und einen oder mehrere dazwischen angeordnete Kerne. Das Gussform-Unterteil ist beispielsweise in ein sandgefülltes Volumen eingebettet. Bei dem Kern, auf den sich die vorliegende Erfindung bezieht, kann es sich insbesondere um einen Hauptkern handeln, also um den einzigen, größten, und/oder zentral angeordneten Kern. Die Gussform kann auch noch zusätzliche Kerne, so genannte Nebenkerne, aufweisen.

Unter einer Tunnelstruktur ist insbesondere ein freies Volumen innerhalb des Kerns zu verstehen, in welchem ein Armierungselement anordenbar ist und welches nicht vollständig an der Oberfläche (d. h. Außenseite) des Kerns verläuft.

Bevorzugt werden die Randelemente und das Zentralelement mit einer Vielzahl von Armierungsstrukturen miteinander verbunden. Beispielsweise wird jedes Randelement mit dem Zentralelement über mindestens (oder genau) eine jeweilige Armierungsstruktur verbunden, sodass zwischen jedem Randelement und dem Zentralelement entsprechend korrespondierende Tunnelstrukturen vorliegen. Alternativ oder zusätzlich kann auch jedes Randelement mit seinen unmittelbar benachbarten (d.h. anliegenden) Randelementen - typischerweise zwei - über mindestens (oder genau) eine jeweilige Armierungsstruktur verbunden werden, wofür zwischen jedem Randelement seinen unmittelbar benachbarten Randelementen entsprechend korrespondierende Tunnelstrukturen vorliegen können.

Bevorzugt weist die Tunnelstruktur eines Kernelements (oder weisen die Tunnelstrukturen mehrerer Kernelemente oder sogar die Tunnelstrukturen aller Kernelemente) zumindest abschnittsweise geradlinige Tunnelstrukturen auf. Gekrümmte Abschnitte sind ebenfalls möglich, wobei der Krümmungsradius sich entlang eines Abschnitts nicht (oder im Wesentlichen nicht) ändert. Gekrümmte (also nicht-geradlinige) Abschnitte der Tunnelstrukturen korrespondieren mit gekrümmten Armierungselementen (insbesondere mit demselben Krümmungsradius), während geradlinige Abschnitte mit geradlinigen Armierungselementen korrespondieren.

In einfachen Geometrien des Kerns kann beispielsweise an mindestens einer Schnittstelle zwischen zwei Kernelementen (oder an mehreren Schnittstellen, oder sogar an allen Schnittstellen) vorgesehen sein, dass zwei daran anliegende und miteinander korrespondierende Tunnelstrukturen (oder auch alle daran anliegende und miteinander korrespondierende Tunnelstrukturen) dieselbe Krümmung aufweisen oder beide fluchtend (d.h. linear abhängig) geradlinig sind, zumindest abschnittsweise an einem jeweiligen Abschnitt, der an die Schnittstelle angrenzt (oder überall). In diesem Fall kann die Armierungsstruktur an dieser Schnittstelle bevorzugt ein Armierungselement mit derselben Krümmung bzw. Geradlinigkeit aufweisen oder sein. Das entsprechende Armierungselement kann vorteilhaft entlang der Tunnelstruktur eines ersten Kernelements eingeführt (oder: eingeschoben) werden und (insbesondere mit Fortführung derselben Bewegung) an der Schnittstelle in das zweite Kernelement an derselben Schnittstelle teilweise eingeschoben werden, sodass das entsprechende Armierungselement über die Schnittstelle hinweg in die beiden Kernelemente eingesetzt ist. Auf diese Weise können die beiden Kernelemente besonders robust miteinander verbunden werden.

Bei komplizierteren Geometrien des Kerns kann es vorkommen, dass an mindestens einer Schnittstelle zwischen zwei Kernelementen (oder an mehreren Schnittstellen, oder sogar an allen Schnittstellen) die Armierungsstruktur aus zwei oder mehr Armierungselementen zusammengefügt wird, insbesondere nachdem die zwei oder mehr Armierungselemente ganz oder teilweise in ein oder mehrere Kernelemente eingeführt wurden. Das Zusammenfügen mehrerer Armierungselemente (insbesondere nach deren Anordnung in einem oder mehreren Kernelementen) zu der Armierungsstruktur kann beispielsweise stoffschlüssig (etwa durch Schweißen, Löten, Verkleben, etc.) oder formschlüssig (durch Verschrauben etc.) erfolgen.

Das Befestigen von Armierungselementen (und damit der Armierungsstruktur) in Kernelementen kann beispielsweise zumindest dadurch erfolgen, dass ein Volumen der Tunnelstruktur, welches nicht von dem Armierungselement ausgefüllt wird, ganz oder teilweise mit einem Formstoff ausgefüllt wird. Ein solcher Formstoff besteht bevorzugt aus einem Formgrundstoff (z.B. einem feuerfesten Mineralsand wie etwa Quarzsand, Chromitsand, Zirkonsand und/oder anderen Sanden), einem Bindemittel und ggfs. Zusätzen. Beispielsweise kann der Formgrundstoff mit einem Kunstharz (wie etwa einem Furanharz) gemischt werden.

Vorteilhaft sind somit nur solche Tunnelstrukturen vorgesehen, in welchen auch mindestens eine Armierungsstruktur angeordnet wird, bzw. werden in allen Tunnelstrukturen, welche miteinander korrespondieren, auch Armierungsstrukturen angeordnet.

Mindestens eine Armierungsstruktur, mindestens eine Armierungsstruktur pro Schnittfläche, oder alle Armierungsstrukturen, können jeweils aus einem, zwei, drei, oder mehr geradlinigen Armierungselementen bestehen, insbesondere aus mit einem Gewinde versehenen Stangen und/oder Hohlprofilen.

Gemäß einigen bevorzugten Ausführungsformen, Varianten oder Verfeinerungen von Ausführungsformen weisen der Kern und/oder das Bauteil eine Symmetrie, insbesondere eine Drehsymmetrie, auf, und das Zentralelement umfasst eine Symmetrieebene oder ein Drehsymmetriezentrum des Kerns und/oder des Bauteils. Auf diese Weise verteilen sich die Kräfte besonders gleichmäßig über den aus den verschiedenen Kernelementen zusammengefügten Kern, was ihn während des Gusses besonders stabil macht.

Das Drehsymmetriezentrum ist bevorzugt im Wesentlichen (oder genau) im Zentrum des Zentralelements angeordnet oder verläuft durch dieses hindurch; die Symmetrieebene verläuft bevorzugt im Wesentlichen (oder genau) durch das Zentrum des Zentralelements. Unter dem Zentrum des Zentralelements kann ein Volumen um einen geometrischen (d.h. aufgrund des Volumen bestimmten) und/oder physikalischen (d.h. aufgrund der Dichteverteilung bestimmten) Schwerpunkt des Zentralelements herum verstanden werden, wobei dieses Volumen beispielsweise zwischen 1 % und 10%, etwa 5%, des Gesamtvolumens des Zentralelements umfassen kann.

Das Zentralelement und die Randelemente sind bevorzugt derart gestaltet, dass das Zentralelement in mindestens einer 2-dimensionalen Ebene vollständig von den Randelementen ringsum umgeben ist. Auf diese Weise können entstehende Kräfte besser kompensiert werden.

Hierbei kann die Anzahl der Kernelemente eine theoretisch minimale Anzahl von Kernelementen übersteigen, wobei sich die theoretisch minimale Anzahl von Kernelementen durch eine optimale Überlagerung des pro additivem Fertigungsgang fertigbaren Volumens mit dem Kern ergibt. Somit werden unter Verwendung des erfindungsgemäßen Verfahren typischerweise mehr additive Fertigungsschritte nötig sein als im Stand der Technik, bei mosaikhafter Zusammensetzung des Kerns zur maximalen Ausnutzung des jeweils fertigbaren Volumens. Im Gegenzug ergeben sich jedoch die beschriebenen Vorteile bezüglich der Stabilität.

Zudem sind im Stand der Technik die Schnittstellen zwischen den zusammenzusetzenden Elementen plan, entsprechend den typischerweise planen (d.h. ebenen) Begrenzungen des Druckvolumens ("job box") einer additiven Fertigungsanlage. Im Gegensatz dazu werden bei der vorliegenden Erfindung die Schnittstellen (oder mindestens eine Schnittstelle) eine Krümmung aufweisen, insbesondere wenn eine (vollständige oder annähernde) Drehsymmetrie des Bauteils vorliegt. Mittels solcher gekrümmter Schnittstellen können Kräfteverteilungen während des Gießens besser kontrolliert werden.

Gemäß einigen bevorzugten Ausführungsformen, Varianten oder Verfeinerungen von Ausführungsformen weisen mindestens 50%, bevorzugt mindestens 75%, besonders bevorzugt mindestens 85% des Zentralelements eine Symmetrie, insbesondere eine Drehsymmetrie, auf. Hierunter soll verstanden werden, dass, wenn man jeweils einen nicht-symmetrischen Teil ausblendet (bzw. definiert, dass dieser Teil der Symmetrie genügen soll), dann auch der verbleibende Teil der Symmetrie genügt. Beispielsweise könnte - stark vereinfacht gesprochen - das Rad eines Fahrrads bis auf das Ventil drehsymmetrisch sein. Würde man also den Kreissektor, in welchem das Ventil angeordnet ist, ausblenden, und für diesen Teil die Symmetrie postulieren, dann wäre das gesamte restliche Rad drehsymmetrisch, beispielsweise gemäß einer C9-Symmetrie oder dergleichen. In diesem Beispiel wäre das Rad also zu mindestens 8/9 symmetrisch.

Vorteilhaft sind mindestens zwei, vorteilhaft drei oder mehr, bis hin zu N-2 oder N-1, wobei N die Gesamtzahl der Randelemente darstellt, der Randelemente miteinander deckungsgleich ausgebildet. Dies erhöht weiter die Symmetrie der Zusammensetzung des zusammengesetzten Kerns, was ihn wiederum robuster werden lässt. Außerdem gibt es so die Möglichkeit, Randteile, die beschädigt werden, leicht zu ersetzen, da man potenziell für maximal 4 verschiedene Typen von Kernelementen (das Zentralelement, die zwei nicht-deckungsgleichen Randelemente, und die deckungsgleichen Randelemente) Ersatz vorhalten muss. Im Fall von nur einem einzelnen nicht-deckungsgleichen Randelement müssen dementsprechend nur 3 verschiedene Typen von Kernelementen vorgehalten werden.

Gemäß einigen bevorzugten Ausführungsformen, Varianten oder Verfeinerungen von Ausführungsformen liegt zwischen jedem Randelement und dem Kernelement an mindestens einer jeweiligen Schnittstelle mindestens ein fluchtender Übergang von Tunnelstrukturen vor. Vorteilhaft ist durch die Tunnelstrukturen und den fluchtenden Übergang hindurch ein Armierungselement eingeführt und in diesem Zustand (über die Schnittstelle und den Übergang hinweg) befestigt. Das Armierungselement kann geradlinig ausgebildet sein, insbesondere wenn die beiden anliegenden Tunnelstrukturen ebenfalls geradlinig ausgebildet sind, oder gekrümmt ausgebildet sein, insbesondere wenn die beiden anliegenden Tunnelstrukturen ebenfalls gekrümmt ausgebildet sind. Im letzteren Fall weisen die Tunnelstrukturen und das Armierungselement vorteilhaft denselben Krümmungsradius auf.

Eine oder mehrere Armierungsstrukturen können jeweils aus einem einzelnen solchen Armierungselement bestehen.

Gemäß einigen bevorzugten Ausführungsformen, Varianten oder Verfeinerungen von Ausführungsformen ist mindestens ein Armierungselement (bevorzugt eine Vielzahl von Armierungselementen, der Großteil von Armierungselementen, oder alle Armierungselemente) als eine mit einem Gewinde versehene Stange ausgebildet, beispielsweise als eine Gewindestange. Eine mit einem Gewinde versehene Stange kann beispielsweise an einem Ende, an beiden Enden, oder überall (= Gewindestange) mit einem Gewinde, insbesondere einem Außengewinde versehen sein. Die Stange selbst ist vorzugsweise massiv ausgebildet, kann in manchen Varianten aber auch hohl ausgebildet sein. Eine Stange soll hierin stets insbesondere als geradlinige Stange verstanden werden.

Alternativ oder zusätzlich kann mindestens ein Armierungselement (bevorzugt eine Vielzahl von Armierungselementen, der Großteil von Armierungselementen, oder alle Armierungselemente) als ein Hohlprofil ausgebildet sein. Beide Arten von Armierungselementen sind leicht handhabbar und bewirken, in die Tunnelstrukturen eingeführt, eine hohe Kohärenz des zusammengesetzten Kerns.

Die als Hohlprofil ausgeführten Armierungselemente können insbesondere einen im Wesentlichen (oder vollständig) rechteckigen oder quadratischen Querschnitt aufweisen, was sie besonders biegesteif macht.

Nach dem Einführen in die Tunnelstrukturen können mindestens zwei Armierungselemente miteinander verbunden, beispielsweise verschweißt, werden, um den Zusammenhalt des zusammengesetzten Kerns während des Gusses weiter zu verstärken. Hierzu können in den Kernelementen entsprechende Ausnehmungen (hier als Verbindungs-Ausnehmungen, oder: Fenster, bezeichnet) vorgesehen sein, welche ein Verbinden (insbesondere Verschweißen) von Armierungselementen ermöglichen. Eine zum Verschweißen vorgesehene Verbindungs-Ausnehmung kann auch als Verschweißungs-Ausnehmung bezeichnet werden. Zum Herstellen des Kerns können diese Ausnehmungen nach dem Verbinden (insbesondere Verschweißen) mit einem Formstoff (s.o.) verschlossen werden.

Gemäß einigen bevorzugten Ausführungsformen, Varianten oder Verfeinerungen von Ausführungsformen umfasst der Kern in mindestens einer Dimension einen Durchmesser von 2 Metern oder mehr. Ein Volumen des Kerns kann 3000 Liter oder mehr, insbesondere 4000 Liter oder mehr betragen. Das herzustellende Bauteil kann im Stahlguss (beispielsweise aus GX4CrNi13-4) ein Gewicht von mindestens 1 Tonne aufweisen. Der Kern selbst kann ein Gewicht von über 4 Tonnen, insbesondere von über 5 Tonnen, beispielsweise von über 6 Tonnen, aufweisen. Insbesondere bei derartigen großformatigen Bauteilen, d.h. Bauteilen (bzw. deren Kernen), deren Eigenschaften insbesondere in einem oder mehrere dieser Parameterbereiche liegen, kommen die Vorzüge der vorliegenden Erfindung besonders zum Tragen. Solche Bauteile können beispielsweise Turbinen oder Impeller, insbesondere für Kraftwerke, darstellen.

Das entsprechende Bauteil kann aus einem Gussstahl hergestellt werden, und kann, beispielsweise wenn es aus GX4CrNi13-4 hergestellt ist, ein Gewicht von 6 Tonnen oder mehr, von 10 Tonnen oder mehr, oder sogar von 12 Tonnen oder mehr aufweisen.

Gemäß einigen bevorzugten Ausführungsformen, Varianten oder Verfeinerungen von Ausführungsformen sind das Zentralelement und die Randelemente derart ausgebildet, dass an einer jeweiligen Schnittstelle zwischen dem Zentralelement und einem jeweiligen Randelement eine nach außen zugängliche Ausnehmung (oder: ein Fenster) angeordnet ist. Die Tunnelstrukturen in dem Randelement und dem Zentralelement münden dabei vorteilhaft an der Schnittstelle in die nach außen zugängliche Ausnehmung. An jeder Schnittstelle kann ein jeweiliges erstes Armierungselement in eine Tunnelstruktur des Zentralelements eingeführt werden und ein jeweiliges zweites Armierungselement in eine Tunnelstruktur des zugehörigen Randelements eingeführt werden. Das erste und das zweite Armierungselement können in der Ausnehmung miteinander verschweißt werden. Dabei kann ein Schweißgerät über die Ausnehmung von außen an die Schweißnaht geführt werden. Die miteinander verschweißten Armierungselemente bilden somit eine Armierungsstruktur, welche über die Schnittstelle hinweg das zugehörige Randelement und das Zentralelement miteinander verbindet.

Gemäß einigen bevorzugten Ausführungsformen, Varianten oder Verfeinerungen von Ausführungsformen werden nach dem Verschweißen der Armierungselemente die Tunnelstrukturen, und optional Hohlräume innerhalb der Armierungselemente, mit einem Formstoff (s.o.) aufgefüllt. Auf diese Weise wird die Armierungsstruktur besonders fest mit dem Kern verbunden und somit auch die Randelemente mit dem Zentralelement.

Gemäß einigen bevorzugten Ausführungsformen, Varianten oder Verfeinerungen von Ausführungsformen umfasst das Bereitstellen der Kernelemente eine additive Fertigung, insbesondere durch 3D-Sanddruck (beispielsweise mit Formstoffen basierend auf Quarzsand), der einzelnen Kernelemente.

Gemäß einigen bevorzugten Ausführungsformen, Varianten oder Verfeinerungen von Ausführungsformen umfasst das Bereitstellen der Kernelemente weiterhin zumindest die Schritte:
- Bereitstellen eines 3D-Modells des Kerns;
- Unterteilen des 3D-Modells in mehrere 3D-Einzelmodelle, umfassend:
   - Bestimmen eines Wurzelelementmodells, welches einen räumlich zentralen Bereich des 3D-Modells enthält und welches zumindest einen Teil des Zentralelements darstellt;
   - Bestimmen einer Mehrzahl von Randelementmodellen, welche die Randelemente darstellen;
   - Anpassen des bestimmten Wurzelelementmodells und zumindest eines der Randelementmodelle derart, dass ein physisches Zusammensetzen des angepassten Wurzelelementmodells, des zumindest einen angepassten Randelementmodells und der restlichen Randelementmodelle ermöglicht wird und dass durch Zusammensetzen der restlichen Randelementmodelle, des zumindest einen angepassten Randelementmodells, und des angepassten Wurzelmodells das 3D-Modell des Kerns entsteht, wobei das angepasste Wurzelelementmodell das Zentralelement darstellt; und
- Additives Fertigen der Kernelemente, und zwar des Zentralelements anhand des angepassten Wurzelelementmodells sowie der Randelemente anhand des zumindest einen angepassten Randelementmodells sowie der restlichen Randelementmodelle.

Hier und im Folgenden sowie im Vorangehenden versteht es sich, dass Aussagen über geometrische Eigenschaften der Kernelemente (Zentralelement+Randelemente) entsprechende Aussagen über geometrische Eigenschaften der 3D-Einzelmodelle, gemäß welchen die Kernelemente herzustellen sind, implizieren, und umgekehrt.

Vorteilhaft werden lediglich genau ein Randelement, genau zwei Randelemente, oder genau 3 Randelemente angepasst. Besonders bevorzugt werden nur genau zwei Randelemente angepasst.

Auf diese Weise wird erreicht, dass eine etwaige in dem Kern enthaltene (hier beispielsweise noch vollständige) Symmetrie weitestmöglich erhalten bleibt, und nur gerade so viel verändert wird, dass der Kern aus den Kernelementen zusammensetzbar ist.

Gemäß einigen bevorzugten Ausführungsformen, Varianten oder Verfeinerungen von Ausführungsformen wird das Wurzelelementmodell derart bestimmt, dass es eine Symmetrie, insbesondere eine Drehsymmetrie, aufweist, und das Anpassen des Wurzelelementmodells derart durchgeführt, dass es diese Symmetrie zumindest teilweise bricht. Es hat sich nämlich herausgestellt, dass das leichte Brechen der Symmetrie des Wurzelelements es deutlich erleichtert (oder in manchen Varianten sogar erst ermöglicht), den Kern aus den Kernelementen zusammenzusetzen.

Gemäß einigen bevorzugten Ausführungsformen, Varianten oder Verfeinerungen von Ausführungsformen werden die Randelementmodelle derart bestimmt, dass möglichst viele, bevorzugt alle bis auf eines, oder alle, dieselbe Form aufweisen. Ob dies jeweils möglich ist, ergibt sich aus der Geometrie und Topologie des jeweils herzustellenden Bauteils.

Gemäß einigen bevorzugten Ausführungsformen, Varianten oder Verfeinerungen von Ausführungsformen werden diejenigen Randelemente, welche von Randelementmodellen dargestellt werden, welche dieselbe Form aufweisen, zum Herstellen des Kerns zueinander symmetrisch bezüglich eines Symmetriezentrums, insbesondere einer Drehsymmetrieachse, des Wurzelelementmodells, aus welchem das Zentralelement durch Anpassen hervorgegangen ist, angeordnet und in dieser Anordnung mit dem Zentralelement verbunden.

Gemäß einem zweiten Aspekt stellt die vorliegende Erfindung ein Verfahren zum Herstellen eines (insbesondere großformatigen) Bauteils in einem Gussverfahren bereit, umfassend:
Herstellen eines Kerns einer Gussform in einem Verfahren nach einer der Ausführungsform des ersten Aspekts der vorliegenden Erfindung;
Herstellen der Gussform unter Verwendung des Kerns; und Herstellen des Bauteils in einem Gussverfahren unter Verwendung der hergestellten Gussform.

Gemäß einem dritten Aspekt stellt die vorliegend Erfindung einen Kern für eine Gussform bereit, umfassend:
- ein Zentralelement, welches einen räumlich zentralen Bereich des Kerns enthält; und
- mehrere Randelemente, welche an dem Zentralelement angeordnet und mit dem Zentralelement verbunden sind,

wobei die Kernelemente zumindest teilweise (bevorzugt alle) Tunnelstrukturen aufweisen, die zumindest teilweise (bevorzugt überall) an Schnittstellen zwischen zwei Kernelementen miteinander korrespondieren, wobei eine jeweilige Armierungsstruktur aus mindestens einem Armierungselement über die jeweilige Schnittstelle hinweg in den Tunnelstrukturen angeordnet und dort befestigt ist; und
wobei mindestens eine Armierungsstruktur in miteinander korrespondierenden Tunnelstrukturen von mindestens zwei Kernelementen angeordnet (und bevorzugt dort befestigt) ist.

Bevorzugt sind die Tunnelstrukturen, und besonders bevorzugt auch etwaige Hohlräume in der mindestens einen Armierungsstruktur, aufgefüllt, z.B. mit einem Formstoff (s.o.).

Gemäß einigen bevorzugten Ausführungsformen, Varianten oder Verfeinerungen von Ausführungsformen sind geradlinige oder gekrümmte Armierungselemente (jeweils als eine Armierungsstruktur oder als Teil einer Armierungsstruktur) in die Tunnelstrukturen der an einer Übergangsfläche (als einer Art von Schnittstelle) anliegenden Kernelemente über die Übergangsfläche hinweg eingesetzt.

Gemäß einigen bevorzugten Ausführungsformen, Varianten oder Verfeinerungen von Ausführungsformen handelt es sich bei dem mindestens einen Armierungselement (oder bei mehreren Armierungselementen oder sogar bei allen Armierungselementen) um eine mit einem Gewinde versehene Stange oder um ein Hohlprofil.

Gemäß einem vierten Aspekt stellt die vorliegende Erfindung eine Verwendung eines Kerns nach einer Ausführungsform des ersten Aspekts der vorliegenden Erfindung zum Herstellen eines (insbesondere großformatigen) Bauteils in einem Gussverfahren bereit.

Gemäß einem fünften Aspekt stellt die vorliegende Erfindung ein Computerprogrammprodukt bereit, welches umfasst:
- ein 3D-Modell eines Kerns einer Gussform, welches mehrere 3D-Einzelmodelle aufweist, welche jeweils ein Kernelement darstellen, umfassend:
   - ein Zentralelementmodell, welches ein Zentralelement darstellt, welches einen räumlich zentralen Bereich des Kerns enthält; und
   - mehrere Randelementmodelle, welche Randelemente darstellen, welche dazu ausgelegt sind, an dem Zentralelement angeordnet und mit dem Zentralelement verbunden zu werden,
   wobei die 3D-Einzelmodelle derart gestaltet sind, dass das Zentralelementmodell und/oder die Randelementmodelle zumindest teilweise (oder alle) Tunnelstrukturen aufweisen, die zumindest teilweise (oder überall) an Schnittstellen zwischen zwei 3D-Einzelmodellen miteinander derart korrespondieren, dass eine jeweilige Armierungsstruktur aus mindestens einem Armierungselement über die jeweilige Schnittstelle hinweg in den Tunnelstrukturen von an der Schnittstelle anliegenden, gemäß den 3D-Einzelmodellen hergestellten Kernelementen anordenbar ist; und
- Steueranweisungen zum Steuern einer additiven Fertigungseinrichtung zum Fertigen des Zentralelements und der Randelemente gemäß dem 3D-Einzelmodellen.

Gemäß einem sechsten Aspekt stellt die vorliegende Erfindung ein nicht-flüchtiges, computerlesbares Datenspeichermedium bereit, umfassend:
- ein 3D-Modell eines Kerns einer Gussform, welches mehrere 3D-Einzelmodelle aufweist, welche jeweils ein Kernelement darstellen, umfassend:
   - ein Zentralelementmodell, welches ein Zentralelement darstellt, welches einen räumlich zentralen Bereich des Kerns enthält; und
   - mehrere Randelementmodelle, welche Randelemente darstellen, welche dazu ausgelegt sind, an dem Zentralelement angeordnet und mit dem Zentralelement verbunden zu werden,
   wobei die 3D-Einzelmodelle derart gestaltet sind, dass das Zentralelementmodell und/oder die Randelementmodelle zumindest teilweise (oder alle) Tunnelstrukturen aufweisen, die zumindest teilweise (oder überall) an Schnittstellen zwischen zwei 3D-Einzelmodellen miteinander derart korrespondieren, dass eine jeweilige Armierungsstruktur aus mindestens einem Armierungselement über die jeweilige Schnittstelle hinweg in den Tunnelstrukturen von an der Schnittstelle anliegenden, gemäß den 3D-Einzelmodellen hergestellten Kernelementen anordenbar ist; und
- Steueranweisungen zum Steuern einer additiven Fertigungseinrichtung zum Fertigen des Zentralelements und der Randelemente gemäß dem 3D-Einzelmodellen.

Gemäß einem siebten Aspekt stellt die vorliegende Erfindung einen Datenstrom bereit, welcher derart ausgelegt ist, das Computerprogrammprodukt gemäß einer Ausführungsform des fünften Aspekts der vorliegenden Erfindung zu erzeugen.

Weitere vorteilhafte Ausführungsformen, Varianten, und Verfeinerungen von Ausführungsformen ergeben sich aus der nachfolgenden detaillierten Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Es zeigen hierbei:
- Fig. 1: ein schematisches Flussdiagramm zum Erläutern eines Verfahrens gemäß einer Ausführungsform der vorliegenden Erfindung;
- Fig. 2: eine beispielhafte 3D-Darstellung eines zu erzeugenden Bauteils;
- Fig. 3: ein 3D-Modell eines Kerns, basierend auf dem Bauteil aus Fig. 2;
- Fig. 4: den Kern aus Fig. 2 mit zusätzlichen Details;
- Fig. 5: ein Zentralelement des Kerns aus Fig. 3 und Fig. 4;
- Fig. 6: eine Schnittstelle zwischen dem Zentralelement des Kerns aus Fig. 3-5 und einem Randelement des Kerns;
- Fig. 7: schematisch die Anbringung des Kerns aus Fig. 3-5 in einem Gussform-Unterteil;
- Fig. 8: einen weiteren Schritt während der Herstellung des Kerns sowie einer Gussform;
- Fig. 9: noch einen weiteren Schritt während der Herstellung des Kerns sowie der Gussform;
- Fig. 10: eine schematische Darstellung des Kerns zusammen mit einer Anordnung von Armierungselementen;
- Fig. 11: eine schematische perspektivische Darstellung des Kerns aus Fig. 10 aus einem anderen Blickwinkel;
- Fig. 12: eine schematische perspektivische Darstellung eines Gussform-Unterteils;
- Fig. 13: einen Detailausschnitt aus Fig. 12;
- Fig. 14: eine schematische halbtransparente Darstellung eines möglichen Armierungs-Befestigungselements;
- Fig. 15: eine schematische perspektivische Darstellung eines Kerns mit einer anderen geometrischen Form;
- Fig. 16: ein schematisches Flussdiagramm zum Erläutern eines Verfahrens gemäß einer weiteren Ausführungsform der vorliegenden Erfindung;
- Fig. 17: ein schematisches Blockdiagramm zur Erläuterung eines Computerprogrammprodukts gemäß einer weiteren Ausführungsform der vorliegenden Erfindung; und
- Fig. 18: ein schematisches Blockdiagramm zur Erläuterung eines Datenspeichermediums gemäß noch einer weiteren Ausführungsform der vorliegenden Erfindung.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

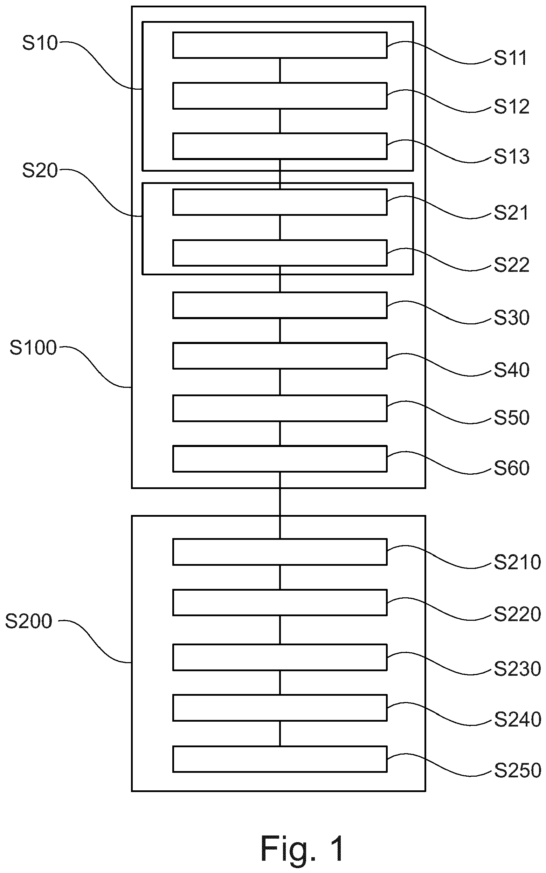

Fig. 1 zeigt ein schematisches Flussdiagramm zum Erläutern eines Verfahrens gemäß einer Ausführungsform der vorliegenden Erfindung, und zwar eines Verfahrens zum Herstellen eines Kerns einer Gussform für ein großformatiges Bauteil. Das Verfahren wird im Folgenden im hohen Detailgrad mit einer Vielzahl von Schritten erläutert. Es versteht sich jedoch, und wird an gegebener Zeit auch noch explizit erwähnt werden, dass das Verfahren auch ohne einige dieser Schritte ausgeführt werden kann.

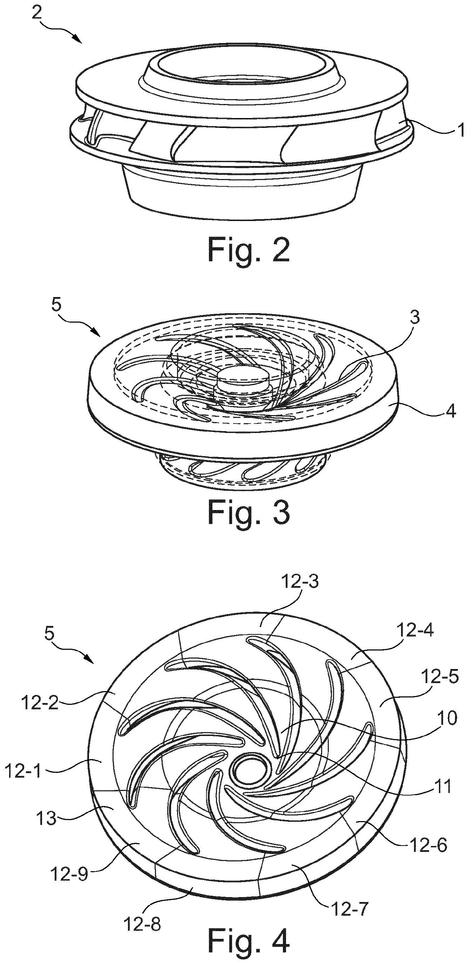

Das Verfahren wird im Folgenden zur besseren Veranschaulichung anhand eines Kerns für einen Impeller als ein Bauteil beschrieben, ist jedoch nicht auf Impeller beschränkt. Zur zusätzlichen Erläuterung dienen im Folgenden außerdem auch noch die Figuren 2 bis 10, welche einzelne Schritte des Verfahrens näher illustrieren.

In einem Schritt S10 wird ein 3D-Modell des Kerns bereitgestellt, beispielsweise in einem typischen Datenformat für 3D-Daten.

Das Bereitstellen S10 des 3D-Modells des Kerns kann optional ein Bereitstellen S11 eines 3D-Modells des zu erzeugenden Bauteils umfassen.

Fig. 2 zeigt eine beispielhafte 3D-Darstellung 2 eines zu erzeugenden Bauteils 1, hier ein Impeller.

Fig. 3 zeigt ein 3D-Modell eines Kerns 5, der auf dem Bauteil 1 aus Fig. 2 basiert.

Das Bereitstellen S10 des 3D-Modells des Kerns 5 kann in diesem Fall außerdem noch ein Invertieren S12 des 3D-Modells 2 des zu erzeugenden Bauteils 1 umfassen, sowie ein Versehen S13 des invertierten 3D-Modells 3 mit einer Kernmarke 4, um ein 3D-Modell des Kerns 5 zu erzeugen. Es versteht sich, dass alternativ das Bereitstellen S10 auch dadurch erfolgen kann, dass ein bereits fertiggestelltes 3D-Modell des Kerns 5 empfangen wird oder aus einem Speicher ausgelesen wird oder dergleichen.

In einem Schritt S20 des Verfahrens wird das 3D-Modell des Kerns 5 in mehrere 3D-Einzelmodelle unterteilt. Fig. 4 veranschaulicht die Unterteilung S20 des 3D-Modells des Kerns 5.

Hierzu wird in einem Teilschritt S21 ein Wurzelelementmodell 10 bestimmt, welches einen räumlich zentralen Bereich des 3D-Modells des Kerns 5 enthält, insbesondere ein Volumen des 3D-Modells des Kerns 5 um einen geometrischen Schwerpunkt des 3D-Modells des Kerns 5. In einem weiteren Teilschritt S22 wird eine Mehrzahl von Randelementmodellen 12-1,...,12-9 bestimmt, derart, dass das Wurzelelementmodell 10 und die Randelementmodelle 12-9 zusammen das gesamte 3D-Modell des Kerns 5 bilden. Bevorzugt sind die Randelementmodelle 12-1,...,12-9 und das Wurzelelementmodell 10 derart bestimmt, dass das Wurzelelementmodell 10 in dem zusammengesetzten 3D-Modell des Kerns 5 in mindestens einer 2D-Ebene ringsum vollständig von den Randelementmodellen 12-1,...,12-9 umgeben ist.

Das Wurzelelementmodell 10 wird vorteilhaft derart bestimmt, dass es eine Symmetrie, insbesondere eine Drehsymmetrie, aufweist, wie in Fig. 4 gut ersichtlich ist (hier: eine C9-Symmetrie). Die Randelementmodelle 12-1,...12-9 werden bevorzugt derart bestimmt, dass möglichst viele, bevorzugt alle, dieselbe Form aufweisen.

Weiterhin bevorzugt wird das Wurzelelementmodell 10 derart bestimmt, dass es eine Symmetrieebene oder (wie im gezeigten Beispiel) ein Drehsymmetriezentrum des Kerns bzw. des 3D-Modells des Kerns 5 aufweist, und zwar besonders bevorzugt im Zentrum des Wurzelelementmodells 10. Insbesondere können somit, wie im gezeigten Beispiel, der Schwerpunkt (physikalisch und/oder geometrisch) des 3D-Modells des Kerns 5, der Schwerpunkt (physikalisch und/oder geometrisch) des Wurzelelementmodells 10, eine Symmetrieebene oder Drehsymmetrieachse des 3D-Modells des Kerns 5, und eine Symmetrieebene oder Drehsymmetrieachse des Wurzelelementmodells 10 zusammenfallen. Alternativ kann auch nur eine beliebige Auswahl dieser vier Elemente zusammenfallen.

In einem Schritt S30 werden das bestimmte Wurzelelementmodell 10 und eines der Randelementmodelle 12-9 derart angepasst, dass ein physisches Zusammensetzen des angepassten Wurzelelementmodells 11, des angepassten Randelementmodells 13 und der restlichen Randelementmodelle 12-1,...,12-8 (im Folgenden zusammenfassend auch teilweise mit 12-i bezeichnet) ermöglicht wird und dass durch Zusammensetzen der restlichen Randelementmodelle 12-i, des angepassten Randelementmodells 13, und des angepassten Wurzelelementmodells 11 das 3D-Modell des Kerns 5 entsteht.

Da das ursprüngliche Wurzelelementmodell 10 so ausgewählt wurde, dass es eine Symmetrie, insbesondere Drehsymmetrie aufweist, wird das Anpassen des Wurzelelementmodells 10 für gewöhnlich zu einem (leichten) Brechen dieser Symmetrie führen. Bevorzugt wird durch das Anpassen des Wurzelelementmodells 10 jedoch beibehalten (falls dies ursprünglich der Fall gewesen sein sollte), dass auch das angepasste Wurzelelementmodell 11 eine Symmetrieebene oder Drehsymmetrieachse des 3D-Modells des Kerns 5, insbesondere in seinem Zentrum, umfasst, und/oder dass das auch angepasste Wurzelelementmodell 11 im zusammengesetzten Zustand des 3D-Modells des Kerns 5 in mindestens einer 2D-Ebene ringsum vollständig von Randelementmodelle 12-i, 13 umgeben ist.

Fig. 4 verdeutlich, wie das angepasste Randelementmodell 13 sich dadurch von dem zugrunde liegenden Randelementmodell 12-9 unterscheidet, dass ein Abschnitt davon dem ursprünglichen Wurzelelementmodell 10 zugeschlagen wurde, um das angepasste Wurzelelementmodell 11 zu erzeugen. Auf diese Weise ist die ursprüngliche C9-Symmetrie des ursprünglichen Wurzelelementmodells 10 aufgebrochen, und auch das angepasste Randelementmodell 13 unterscheidet sich nun von den anderen Randelementmodellen 12-i. Da der Symmetriebruch hier auf 1/9 des Volumens des 3D-Modells des Kerns 5 beschränkt ist, weisen somit 8/9, also ca. 89%, des 3D-Modells des angepassten Wurzelelementmodells 11 die Drehsymmetrie auf (während 100% des ursprünglichen Wurzelelementmodells 10 die Drehsymmetrie aufwiesen).

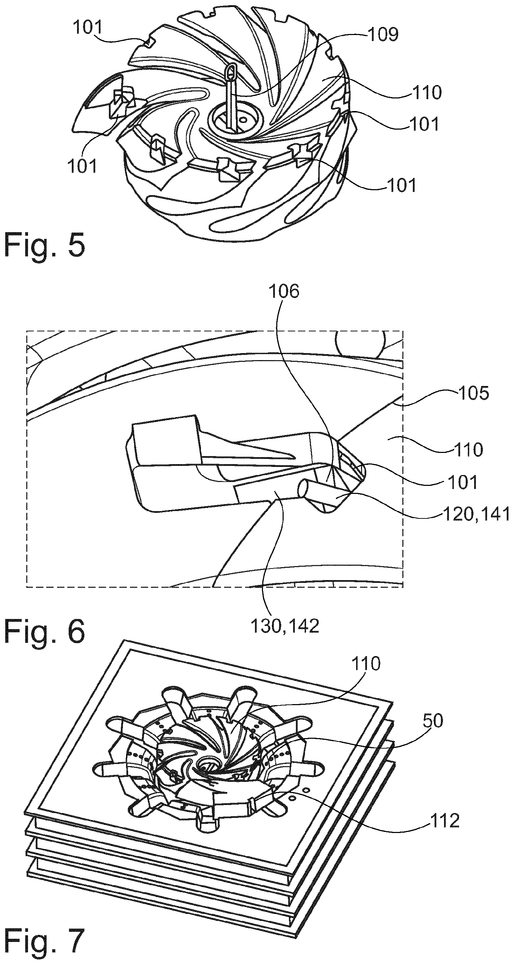

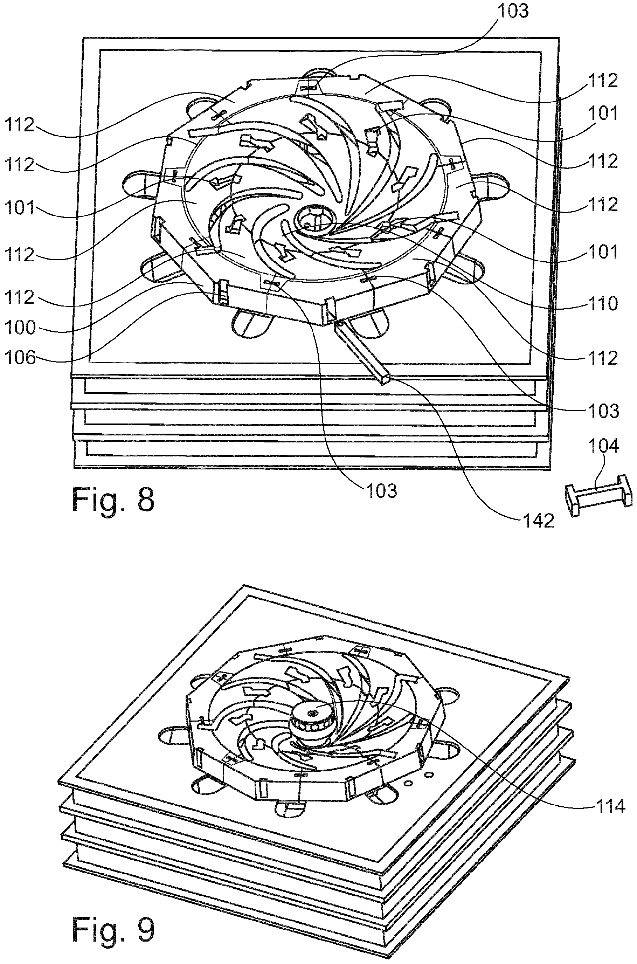

In einem Schritt S40 werden die 3D-Einzelmodelle 11, 12-i, 13, d.h. das angepasste Wurzelelementmodell 11 (oder: Zentralelementmodell) und die Randelementmodelle 12-i, 13, derart angepasst, dass sie zumindest teilweise (oder alle von ihnen) Tunnelstrukturen aufweisen, die zumindest teilweise (oder überall) an Schnittstellen zwischen zwei 3D-Einzelmodellen 11, 12-i, 13 miteinander derart korrespondieren, dass eine jeweilige Armierungsstruktur aus mindestens einem Armierungselement in die Tunnelstrukturen von an der jeweiligen Schnittstelle anliegenden, gemäß den 3D-Einzelmodellen 11, 12-i, 13 hergestellten Kernelementen über die jeweilige Schnittstelle hinweg anordenbar ist. Zur näheren Erläuterung wird hierzu auf die nachfolgenden Figuren, insbesondere Fig. 6 und Fig. 8, verweisen.

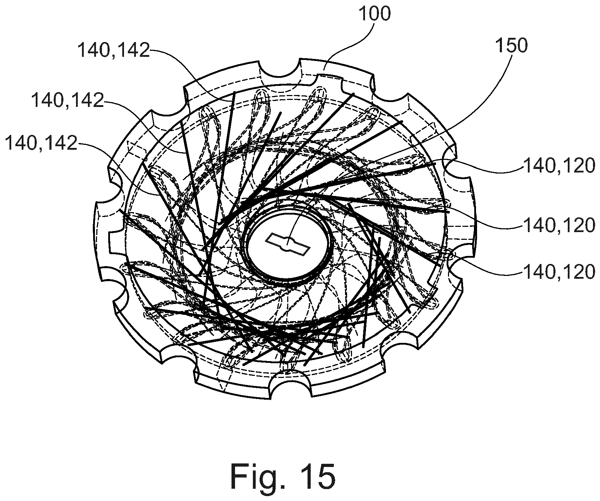

Beispielsweise werden in dem Schritt S40 die 3D-Einzelmodelle 11, 12-i, 13 derart angepasst, dass das angepasste Wurzelelementmodell 11 und/oder die Randelementmodelle 12-i, 13 zumindest teilweise zumindest abschnittsweise geradlinige Tunnelstrukturen aufweisen, die zumindest teilweise an Schnittstellen zwischen zwei Elementmodellen 11, 12-i, 13 miteinander derart korrespondieren, dass geradlinige Armierungselemente (hier also Armierungsstrukturen aus je einem Armierungselement) in die Tunnelstrukturen der an einer Übergangsfläche (als ein Beispiel einer Schnittstelle) anliegenden 3D-Einzelmodelle 11, 12-i, 13 über die Übergangsfläche hinweg einsetzbar wären, wenn die 3D-Einzelmodelle (d.h., das angepasste Wurzelelementmodell 11 und die Randelementmodelle 12-i, 13) physisch vorlägen, siehe hierzu auch Fig. 15 und die zugehörige Beschreibung im Folgenden. Wie im Vorangehenden beschrieben, ist dasselbe auch bei gekrümmten Armierungselementen und entsprechend gekrümmten Tunnelstrukturen möglich.

In einem optionalen Schritt S50 können zusätzlich Verbindungs-Ausnehmungen oder Öffnungen an die Außenfläche des 3D-Modells des Kerns 5 hinzugefügt werden, welche es ermöglichen, aufeinandertreffende Armierungselemente miteinander zu einer Armierungsstruktur zu verbinden, insbesondere zu verschweißen. Insbesondere wo zwei Armierungselemente winklig, d.h. nicht entlang einer gemeinsamen Geraden, aufeinandertreffen, ist es vorteilhaft, wenn später, bei dem tatsächlichen physischen Kern, die Armierungselemente dort verbunden, insbesondere verschweißt, werden.

In einem Schritt S60 erfolgt ein Additives Fertigen von Kernelementen des herzustellenden Kerns, und zwar eines Zentralelements des Kerns anhand (d.h., als physische Implementierung) des angepassten Wurzelelementmodells 11 sowie von Randelementen des Kerns anhand des angepassten Randelementmodells 13 sowie der restlichen Randelementmodelle 12-i. Das additive Fertigen S60 erfolgt vorzugsweise durch 3D-Sanddruck.

Die bisher beschriebenen Schritte S10 bis S60, oder Auszüge davon, können zusammengenommen als ein Schritt S100 gesehen werden, welcher zumindest umfasst:
- Bereitstellen einzelner Kernelemente des Kerns, welche zusammengesetzt im Wesentlichen oder genau dem herzustellenden Kern entsprechen, wobei die einzelnen Kernelemente zumindest umfassen:
   - ein Zentralelement, welches einen räumlich zentralen Bereich des Kerns enthält; und
   - mehrere Randelemente, welche dazu ausgelegt sind, an dem Zentralelement angeordnet und mit dem Zentralelement verbunden zu werden,
wobei die Kernelemente zumindest teilweise Tunnelstrukturen aufweisen, die zumindest teilweise an Schnittstellen zwischen zwei 3D-Einzelmodellen 11, 12-i, 13 miteinander derart korrespondieren, dass eine jeweilige Armierungsstruktur aus mindestens einem Armierungselement in die Tunnelstrukturen von an der jeweiligen Schnittstelle anliegenden, gemäß den 3D-Einzelmodellen 11, 12-i, 13 hergestellten Kernelementen über die jeweilige Schnittstelle hinweg anordenbar ist.

Der Schritt S100 kann auch anders realisiert werden, beispielsweise indem bereits vorgefertigte Kernelemente erworben werden, oder bereits bestehende entsprechende Wurzelelement- und Randelementmodelle additiv gefertigt werden und/oder dergleichen mehr.

In einem Schritt S200 des Verfahrens werden die Randelemente mit dem Zentralelement und miteinander zum Herstellen des Kerns verbunden, was ein Anordnen und Befestigen mindestens einer Armierungsstruktur in miteinander korrespondierenden Tunnelstrukturen von mindestens zwei Kernelementen umfasst, insbesondere ein Anordnen und Befestigen von je mindestens einer Armierungsstruktur in allen miteinander korrespondierenden Tunnelstrukturen aller Kernelemente (siehe insbesondere Fig. 6 und 8 und die zugehörige Beschreibung).

Beispielsweise ist in dem Schritt S200 das Einführen und Befestigen mindestens eines jeweiligen geradlinigen Armierungselements in mindestens zwei Kernelemente, bevorzugt in alle miteinander korrespondierenden Tunnelstrukturen von je zwei Kernelementen, umfasst (siehe insbesondere Fig. 15 und die zugehörige Beschreibung).

Fig. 5 zeigt beispielhaft das Zentralelement 110 nach dessen Herstellung anhand des angepassten Wurzelelementmodells 11. Sichtbar sind dort auch Teile (oder: Abschnitte) von Verbindungs-Ausnehmungen 101, die optional in Schritt S50 hinzugefügt wurden, um dort ein Verbinden, beispielsweise ein Verschweißen, von eingeführten Armierungselementen zu ermöglichen. Die Verbindungs-Ausnehmungen 101 befinden sich allesamt an Schnittstellen zwischen dem Zentralelement 110 und den Randelementen.

Ebenfalls in Fig. 5 gezeigt ist eine Hebeinstrument 109, hier in Bajonettform mit Hohlprofilen ausgebildet. Das Zentralelement 110 und/oder die Randelemente 112 können derart ausgebildet sein, dass sie mindestens eine jeweilige Hebeöffnung aufweisen, in welche ein jeweiliges Hebeinstrument 109 einführbar ist, mittels welchem das entsprechende Kernelement 110, 112 angehoben und so transportiert werden kann. Ein Hebeinstrument 109 in Bajonettform kann etwa in einen Schlitz als Hebeöffnung eingeführt und dort durch Rotation verriegelt werden.

Fig. 6 zeigt beispielhaft eine Schnittstelle 105 zwischen dem Zentralelement 110 und einem der Randelemente 112. Erkennbar ist, dass sich die Verbindungs-Ausnehmung 101 nicht nur an die Außenfläche des Zentralelements 110, sondern auch in das an der Schnittstelle 105 anliegende Randelement 112 (und an dessen Außenfläche) erstreckt. Je nach der genauen Ausgestaltung des Kerns kann es geometrisch unmöglich sein, Armierungselemente 120, 130, 141, 142 in Form von geradlinigen Stangen durch ein Randelement 112 und das Zentralelement 110 hindurch zu legen, ohne das Volumen des Kerns dabei zu verlassen. Beispielsweise kann die stark gedrehte Form, die in Fig. 5 ansatzweise erkennbar ist, des Kerns dies verhindern.

In diesem Fall ist es vorteilhaft, wenn in eine Tunnelstruktur 106 des Zentralelements 110 in einem Schritt S210 eine erste Art von Armierungselement (oder: ein erstes Armierungselement 141, hier z.B. eine mit einem Gewinde versehene Stange, insbesondere eine Gewindestange 120) und in einem Schritt S220 in eine Tunnelstruktur mindestens eines Randelement 112 eine zweite Art von Armierungselement (oder: ein zweites Armierungselement 142, gleich oder verschieden von der ersten Art von Armierungselement, hier ein rechteckiges Hohlprofil 130) eingeführt werden, und diese im Bereich der Schnittstelle 105, bevorzugt in einer an der Schnittstelle 105 angeordneten Verbindungs-Ausnehmung 101, in einem Schritt S230 verbunden, insbesondere formschlüssig oder stoffschlüssig verbunden, beispielsweise verschweißt werden. Bevorzugt erfolgen die Schritt S210-S230 jeweils für alle Schnittstellen 105, d.h., für alle Kombinationen des Zentralelements 110 mit jeweils einem Randelement 112.

Fig. 7 zeigt schematisch, wie das Zentralelement 110 in ein Gussform-Unterteil 50 eingebracht ist, und hier bereits ein erstes Randelement 112 an das Zentralelement 110 angelegt wurde.

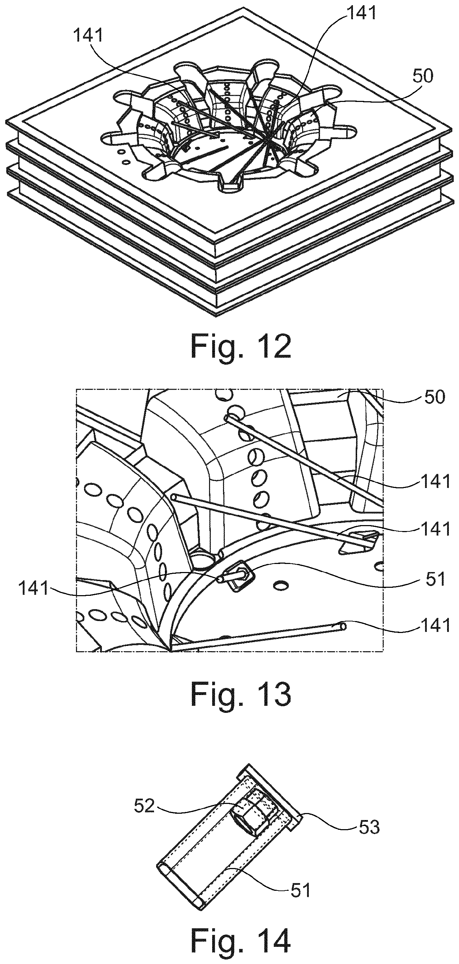

Hierbei kann zunächst ein erstes Armierungselement 141 (hier beispielhaft eine Gewindestange 120) in das Zentralelement 110 eingefügt werden, also in eine der Tunnelstrukturen 106 darin eingebracht werden. Am unteren Ende, d.h. am Grund des Gussform-Unterteils 50, kann ein Armierungs-Befestigungselement vorgesehen sein, um das erste Armierungselement 141 dort zu befestigen (oder: zu verankern). Im vorliegenden Fall, dass das erste Armierungselement 141 eine Gewindestange 120 ist (oder zumindest eine Stange, welche an beiden Enden oder zumindest am unteren Ende mit einem Gewinde versehen ist), kann etwa für dieses (Außen-)Gewinde am Grund des Gussform-Unterteils 50 als Armierungs-Befestigungselement ein Innengewinde angeordnet sein, um das erste Armierungselement dort zu fixieren (siehe hierzu auch Fig. 12 und Fig. 13 und die zugehörige Beschreibung).

Das obere (oder: äußere) Ende dieses ersten Armierungselements 141 kann sodann aus dem Zentralelement 110 in die Verbindungs-Ausnehmung 101 ragen, wie in Fig. 6 dargestellt ist. Nach dem Anlegen des Randelements 112 (oder davor) kann ein zweites Armierungselement 142 (hier beispielhaft das Hohlprofil 130) in eine korrespondierende Tunnelstruktur 106 eingeführt werden, sodass das innere Ende des zweiten Armierungselements 142 an der Schnittstelle 105 in der Verbindungs-Ausnehmung 101 auf das äußere Ende des ersten Armierungselements 141 trifft. Eine Korrespondieren von Tunnelstrukturen 106 kann somit darin bestehen, dass zwei korrespondierende Tunnelstrukturen 106 einander in einer Verbindungs-Ausnehmung 101 begegnen (d.h. beide in eine gemeinsame Verbindungs-Ausnehmung 101 münden).

Daraufhin können die aufeinandertreffenden Enden miteinander verschweißt werden. Dies kann rundum zumindest für alle Schnittstellen 105 zwischen dem Zentralelement 110 und einem jeweiligen Randelement 112 erfolgen. Dasselbe kann auch zwischen zwei oder mehr Randelementen 112 erfolgen.

Fig. 8 zeigt einen Zustand, wo alle Randelemente 112 um das Zentralelement 110 herum angeordnet sind um den Kern 100 zu bilden, und die jeweiligen Armierungselemente 141, 142 in den Verbindungs-Ausnehmungen 101, hier Verschweißungs-Ausnehmungen, miteinander verschweißt sind.

In den Randelementen 112 können Spangen-Ausnehmungen 103 vorgesehen sein, wie in Fig. 8 jeweils an der Schnittstelle zwischen zwei Randelementen 112 ersichtlich. In diese Spangen-Ausnehmungen 103 können in einem optionalen Schritt S240 Spangen 104, beispielsweise Metallspangen, eingesetzt werden, wie sie im Stand der Technik bereits bekannt sind. Im Vergleich zu der hierin offenbarten Technik der Armierungsstrukturen aus (einem oder mehreren) Armierungselementen 141, 142 wird jedoch deutlich, wie die Armierungsstrukturen eine deutlich umfassendere und robustere Fixierung des gesamten Kerns 100 bereitstellen.

In einem Schritt S250 werden sämtliche etwaige noch vorhandene Ausnehmungen 101, 103, darunter insbesondere etwaige Verbindungs-Ausnehmungen 101 und/oder etwaige Spangen-Ausnehmungen 103, mit einer Füllmasse verschlossen und (optional) die Tunnelstrukturen 106 mit der Füllmasse aufgefüllt, beispielsweise mit einem Formstoff. Der Formstoff besteht aus einem Formgrundstoff (z.B. einem feuerfesten Mineralsand wie etwa Quarzsand, Chromitsand, Zirkonsand und/oder anderen Sanden), einem Bindemittel und ggfs. Zusätzen. Beispielsweise kann der Formgrundstoff mit einem Harz (wie etwa einem Furanharz) gemischt werden.

Fig. 9 zeigt einen Zustand, in welchem die Ausnehmungen 101, 103 verschlossen wurden und die Tunnelstrukturen 106 aufgefüllt wurden.

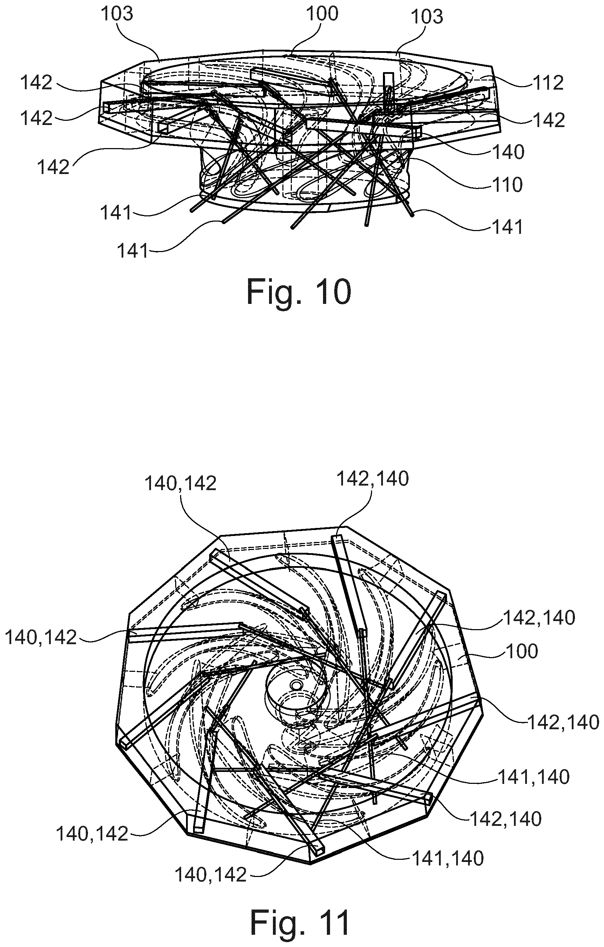

Fig. 10 zeigt schematisch den Kern 100, zusammengesetzt aus dem Zentralelement 110 und den Randelementen 112, und verbunden wie im Vorangehenden beschrieben wurde, wobei das Zentralelement 110 und die Randelemente 112 hier transparent dargestellt sind. Somit erkennt man deutlich die Anordnung von ersten Armierungselementen 141 und zweiten Armierungselementen 142, die an einem jeweiligen Ende miteinander verschweißt sind. Die Kombination jeweils einer ersten Armierungselements 141 und eines zweiten Armierungselements 142 ist auch als eine Armierungsstruktur 140 bezeichenbar. Diese Anordnung von Armierungsstrukturen 140, d.h. von Armierungselementen 141, 142 ist vorzugsweise symmetrisch (besonders bevorzugt drehsymmetrisch), insbesondere bezüglich einer Symmetrieebene oder, besonders bevorzugt, Symmetrieachse, des Kerns 100 bzw. des herzustellenden Bauteils 1.

Im dargestellten Beispiel weisen die ersten Armierungselemente 141 (hier exemplarisch mit zumindest einem Gewinde versehene Stangen, insbesondere Gewindestangen 120) jeweils eine höhere Biegesteifigkeit auf als die zweiten Armierungselemente 142 (hier exemplarisch Hohlprofile 130, insbesondere rechteckige oder quadratische Hohlprofile). Dies kann beispielsweise dadurch erreicht werden, dass die zweiten Armierungselemente 142 mit einem größeren Querschnitt ausgebildet sind als die ersten Armierungselemente 141. Im vorliegenden Beispiel wird dies zusätzlich dadurch verstärkt, dass (vor allem rechteckige oder quadratische) Hohlprofile eine höhere Biegesteifigkeit aufweisen als Rundlinge oder runde Stangen.

Somit haben die als Gewindestangen 120 ausgebildeten ersten Armierungselemente 141 im hier gezeigten spezifischen Beispiel den Vorteil, dass sie nach Einlegen des Zentralelements 110 in das Gussform-Unterteil 50 durch entsprechende Tunnelstrukturen 106 in dem Zentralelement 110 hindurchgeschoben und, mit ihrem Gewinde, in entsprechende Armierungs-Befestigungselemente (hier: Gegengewinde) in dem Gussform-Unterteil 50 eingeschraubt werden können, um Zugkräfte aufzunehmen, da beispielsweise der Kern 100 während des Gusses sonst nach oben geschwemmt werden könnte.

Am oberen Ende des Kerns 100, wo insbesondere der Zusammenhalt der Randelemente 112 mit dem Zentralelement 110 vorteilhaft ist, sind hingegen die zweiten Armierungselemente 142 mit der höheren Biegesteifigkeit angeordnet. Es versteht sich jedoch, dass beispielsweise auch die ersten Armierungselemente 141 als Hohlprofile 130 ausgebildet sein könnten, insbesondere, wenn diese an ihrem unteren Ende mit einer Rast- oder Hakenstruktur ausgebildet sind, welche in einen entsprechenden Gegenelement (z.B. ebenfalls einer Rast- oder Hakenstruktur) in dem Gussform-Unterteil 50 fixiert werden.

Über die Schnittstelle 105 zwischen je einem Randelement 112 und dem Zentralelement 110 hinweg ist also jeweils eine Armierungsstruktur 140 angeordnet. Durch Füllen insbesondere der Tunnelstrukturen 106 und etwaiger Hohlräume in Armierungselementen 141, 142 mit einem Formstoff kann die Armierungsstruktur 140 an und in dem Kern 100 befestigt werden.

Je nach konkretem Bauteil 1 können dann weitere Elemente oder Nebenkerne 114 (siehe Fig. 9) insbesondere zu dem Zentralelement 110 hinzugefügt werden, und dann ein Gussform-Oberteil (nicht dargestellt) aufgesetzt und an dem Gussform-Unterteil 50 fixiert werden, um eine vollständige Gussform zu erstellen.

Fig. 11 zeigt dieselbe Darstellung wie Fig. 10, also den transparent dargestellten Kern 100 mit den darin angeordneten und befestigten Armierungsstrukturen 140, hier in einer perspektivischen Darstellung fast direkt von oben. Gut erkennbar ist hier, wie die Drehsymmetrie des Kerns 100 eine drehsymmetrische Anordnung der Armierungsstrukturen 140 ergibt.

Fig. 12 zeigt eine ähnliche Ansicht wie Fig. 9, nur dass der Kern 100 dort vollständig ausgeblendet ist, und von den Armierungsstrukturen 140 lediglich die ersten Armierungselemente 141 sichtbar sind.

Fig. 13 zeigt einen Detailausschnitt aus Fig. 12. Darin ist deutlich erkennbar, dass in Ausnehmungen in dem Gussform-Unterteil 50 (hier speziell in einem von Sand gebildeten Bodenabschnitt des Gussform-Unterteils 50) Armierungs-Befestigungselemente 51 angeordnet sind, an und mit denen die ersten Armierungselemente 141 fixierbar sind.

Fig. 14 zeigt ein als Armierungshülse mit Gegengewinde 52 ausgebildetes Armierungs-Befestigungselement 51 in halbtransparenter Darstellung. Das Armierungs-Befestigungselement 51 ist hier als ein einseitig geschlossenes, viereckiges (insbesondere quadratisches) Hohlprofil ausgebildet. An der geschlossenen Seite ist außen eine Flanschstruktur 53 ausgebildet, mit der das Armierungs-Befestigungselement 51 im Sand des Bodenabschnitts des Gussform-Unterteils 50 verankerbar ist. Innen an der geschlossenen Seite ist ein Gegengewinde 52 (oder: eine Mutter) angeordnet, mit welcher ein jeweiliges erstes Armierungselement 141, welches ein Gewinde aufweist, verschraubbar ist. Wie bereits erläutert wurde, sind auch andere Verbindungs- oder Verankerungstechniken zwischen Armierungselementen 141, 142 und Armierungs-Befestigungselementen 51 möglich.

Möglich ist auch, dass mit Gewinde versehene Stangen 120 als Armierungselemente 141, 142 zusätzlich, oder sogar ausschließlich, mittels Muttern an dem Kern 100 fixiert sind, also beispielsweise an einem oder beiden Enden aus dem Kern 100 herausragen und dort mit Muttern fixiert werden, um Zugbelastungen auf den Kern 100 entgegenzuwirken.

Fig. 15 zeigt schematisch ein weiteres Beispiel für einen Kern 100, aus derselben Perspektive und ebenso transparent dargestellt wie der Kern 100 in Fig. 11. Bei dem in Fig. 15 gezeigten Kern 100 besteht jede Armierungsstruktur 140 lediglich aus einem einzelnen Armierungselement, hier beispielhaft ein geradliniges Armierungselement in Form einer mit einem Gewinde versehenen Stange 120. Diese Armierungsstrukturen 140 können daher, wie im Vorangehenden mit Bezug auf die ersten Armierungselemente 141 beschrieben wurde, in entsprechenden Armierungs-Befestigungselementen 51 des Gussform-Unterteils 50 fixiert oder verankert werden, beispielsweise wie mit Bezug auf Fig. 14 erläutert wurde.

Auch in Fig. 15 ist die Drehsymmetrie des Kerns 100 gut erkennbar. Zudem ist angedeutet, dass die besondere Geometrie dieses Kerns 100 es ermöglicht, dass die jeweilige Armierungsstruktur 140 im Ganzen in die Tunnelstrukturen hinein und bis über eine jeweilige Schnittstelle zwischen dem Zentralelement und einem Randelement hinweg eingeschoben werden kann, sodass ein Verschweißen von mehreren Armierungselementen zu einer Armierungsstruktur hier entfallen kann. Dementsprechend können Tunnelstrukturen von Zentralelement und Randelementen hier jeweils fluchten, ohne dass eine jeweilige Verbindungs-Ausnehmung an der Schnittstelle vorgesehen werden muss. Bei der gezeigten Variante des Kerns 100 ist es zudem vorgesehen, dass manche Randelemente mit mehreren Armierungsstrukturen an dem Kernelement befestigt werden.

Fig. 15 zeigt außerdem, dass der Kern 100 mit einem Aufnahmeschlitz 150 für ein Hebeinstrument 109 versehen sein kann, beispielweise für ein in Bajonettform mit Hohlprofilen ausgebildetes Hebeinstrument 109.

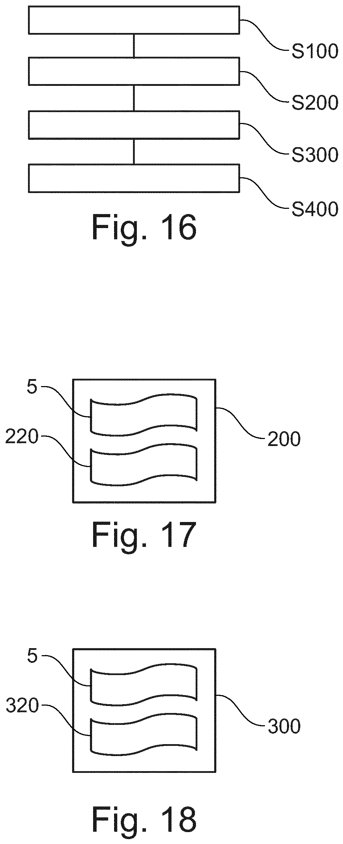

Fig. 16 zeigt ein schematisches Flussdiagramm zur Erläuterung eines Verfahrens gemäß einer weiteren Ausführungsform der vorliegenden Erfindung, nämlich eines Verfahrens zum Herstellen eines (insbesondere großformatigen) Bauteils 1 in einem Gussverfahren.

Zunächst wird in Schritten S100 und S200, wie im Vorangehenden beschrieben, wobei alle genannten Varianten und Optionen möglich sind, der Kern 100 der Gussform hergestellt.

In einem Schritt S300 wird, unter Verwendung des hergestellten Kerns 100, die Gussform hergestellt, beispielsweise wie bereits mit Bezug auf das Gussform-Unterteil und das Gussform-Oberteil beschrieben wurde.

In einem Schritt S400 wird das Bauteil 1 unter Verwendung der hergestellten Gussform hergestellt, insbesondere gegossen, bevorzugt in einem Stahlgussverfahren.

Fig. 17 zeigt ein schematisches Blockschaltbild eines Computerprogrammprodukts 200 gemäß einer Ausführungsform der vorliegenden Erfindung. Das Computerprogrammprodukt 200 umfasst:
- ein 3D-Modell 5 eines Kerns 100 einer Gussform, welches mehrere 3D-Einzelmodelle 11, 12-i, 13 aufweist, welche jeweils ein Kernelement 110, 112 darstellen, umfassend:
   - ein Zentralelementmodell (das angepasste Wurzelelementmodell 11), welches ein Zentralelement 110 darstellt, welches einen räumlich zentralen Bereich des Kerns 100 (sowie, dementsprechend, des 3D-Modells 5 des Kerns) enthält; und
   - mehrere Randelementmodelle 12-i, 13, welche Randelemente 112 darstellen, welche dazu ausgelegt sind, an dem Zentralelement 110 angeordnet und mit dem Zentralelement 110 verbunden zu werden,
   wobei die 3D-Einzelmodelle 11, 12-i, 13 derart gestaltet sind, dass das Zentralelementmodell 11 und/oder die Randelementmodelle 112 zumindest teilweise (oder alle von ihnen) Tunnelstrukturen 106 aufweisen, die zumindest teilweise (oder überall) an Schnittstellen 105 zwischen zwei 3D-Einzelmodellen 11, 12-i, 13 miteinander derart korrespondieren, dass eine jeweilige Armierungsstruktur 140 aus mindestens einem Armierungselement 141, 142 über die jeweilige Schnittstelle 105 hinweg in den Tunnelstrukturen 106 von an der Schnittstelle 105 anliegenden, gemäß den 3D-Einzelmodellen 11, 12-i, 13 hergestellten Kernelementen 110, 112 über die Schnittstelle 105 hinweg anordenbar ist; und
- Steueranweisungen 220 zum Steuern einer additiven Fertigungseinrichtung zum Fertigen des Zentralelements 110 und der Randelemente 112 gemäß den 3D-Einzelmodellen 11, 12-i, 13.

Fig. 18 zeigt ein schematisches Blockschaltbild eines nichtflüchtigen computerlesbaren Datenspeichermediums 300 gemäß einer Ausführungsform der vorliegenden Erfindung. Das Datenspeichermedium 300 umfasst:
- ein 3D-Modell 5 eines Kerns 100 einer Gussform, welches mehrere 3D-Einzelmodelle 11, 12-i, 13 aufweist, welche jeweils ein Kernelement 110, 112 darstellen, umfassend:
   - ein Zentralelementmodell (das angepasste Wurzelelementmodell 11), welches ein Zentralelement 110 darstellt, welches einen räumlich zentralen Bereich des Kerns 100 (sowie, dementsprechend, einen räumlich zentralen Bereich des 3D-Modells 5 des Kerns 100) enthält; und
   - mehrere Randelementmodelle 12-i, 13, welche Randelemente 112 darstellen, welche dazu ausgelegt sind, an dem Zentralelement 110 angeordnet und mit dem Zentralelement 110 verbunden zu werden,
   wobei die 3D-Einzelmodelle 11, 12-i, 13 derart gestaltet sind, dass das Zentralelementmodell und/oder die Randelementmodelle 112 zumindest teilweise (oder alle von ihnen) Tunnelstrukturen 106 aufweisen, die zumindest teilweise (oder überall) an Schnittstellen 105 zwischen zwei 3D-Einzelmodellen 11, 12-i, 13 miteinander derart korrespondieren, dass eine jeweilige Armierungsstruktur 140 aus mindestens einem Armierungselement 141, 142 über die jeweilige Schnittstelle 105 hinweg in den Tunnelstrukturen 106 der an der Schnittstelle 105 anliegenden, gemäß den 3D-Einzelmodellen 11, 12-i, 13 hergestellten Kernelemente 110, 112 über die Schnittstelle 105 hinweg anordenbar ist; und
- Steueranweisungen 320 zum Steuern einer additiven Fertigungseinrichtung zum Fertigen des Zentralelements 110 und der Randelemente 112 gemäß den 3D-Einzelmodellen 11, 12-i, 13.

Das nicht-flüchtige computerlesbare Datenspeichermedium 300 kann beispielsweise als ein Halbleiterspeicher, z. B. ein SSD-Speicherstein ausgebildet sein oder einen solchen aufweisen. Das Datenspeichermedium 300 kann auch eine CD, DVD, Blu-Ray oder eine magnetische Speichervorrichtung aufweisen oder umfassen.

### Bezugszeichenliste

- 1: Bauteil
- 2: 3D-Modell des Bauteils
- 3: invertiertes 3D-Modell des Bauteils
- 4: Kernmarke
- 5: 3D-Modell des Kerns
- 10: Wurzelelement
- 11: angepasstes Wurzelelement
- 12-i: Randelement
- 13: angepasstes Randelement
- 50: Gussform-Unterteil
- 51: Armierungs-Befestigungselement
- 52: Gegengewinde
- 53: Flanschstruktur
- 100: Kern
- 101: Verbindungs-Ausnehmung
- 103: Spangen-Ausnehmung
- 104: Spange
- 105: Schnittstelle
- 106: Tunnelstruktur
- 109: Hebeinstrument
- 110: Zentralelement
- 112: Randelement
- 114: Nebenkern
- 120: Gewindestange oder mit Gewinde versehene Stange
- 130: Hohlprofil
- 140: Armierungsstruktur
- 141: erstes Armierungselement
- 142: zweites Armierungselement
- 150: Aufnahmeschlitz
- 200: Computerprogrammprodukt
- 220: Steueranweisungen
- 300: Datenspeichermedium
- 320: Steueranweisungen
- S100..S400: Verfahrensschritte

## Patentansprüche

1. Verfahren zum Herstellen eines Kerns (100) einer Gussform für ein - insbesondere großformatiges - Bauteil (1), umfassend zumindest die Schritte:
- Bereitstellen (S100) einzelner Kernelemente (110, 112) des Kerns (100), welche zusammengesetzt im Wesentlichen oder genau dem herzustellenden Kern (100) entsprechen, wobei die einzelnen Kernelemente (110, 112) zumindest umfassen:
- ein Zentralelement (110), welches einen räumlich zentralen Bereich des Kerns (100) enthält; und
- mehrere Randelemente (112), welche dazu ausgelegt sind, an dem Zentralelement (110) angeordnet und mit dem Zentralelement (110) verbunden zu werden,
wobei die Kernelemente (110, 112) zumindest teilweise Tunnelstrukturen (106) aufweisen, die zumindest teilweise an Schnittstellen (105) zwischen zwei Kernelementen (110, 112) miteinander derart korrespondieren, dass eine jeweilige Armierungsstruktur (140) aus mindestens einem Armierungselement (141, 142) über die jeweilige Schnittstelle (105) hinweg in den Tunnelstrukturen (106) anordenbar ist; und
Verbinden (S200) der Randelemente (112) mit dem Zentralelement (110) und zumindest teilweise miteinander zum Herstellen des Kerns (100), umfassend Anordnen und Befestigen mindestens einer Armierungsstruktur (141, 142) in miteinander korrespondierenden Tunnelstrukturen (106) von mindestens zwei Kernelementen (110, 112).

2. Verfahren nach Anspruch 1,
wobei der Kern (100) und/oder das Bauteil (1) eine Symmetrie, insbesondere eine Drehsymmetrie, aufweist bzw. aufweisen, und das Zentralelement (110) eine Symmetrieebene oder ein Drehsymmetriezentrum des Kerns (100) und/oder des Bauteils (1) umfasst, insbesondere im Wesentlichen im Zentrum des Zentralelements (110).

3. Verfahren nach Anspruch 1 oder 2,
wobei mindestens 50%, bevorzugt mindestens 75%, besonders bevorzugt mindestens 85% des Zentralelements (110) eine Symmetrie, insbesondere eine Drehsymmetrie, aufweist.

4. Verfahren nach einem der Ansprüche 1 bis 3,
wobei zwischen jedem Randelement (112) und dem Kernelement (110) an mindestens einer Schnittstelle (105) mindestens ein fluchtender Übergang von Tunnelstrukturen (106) vorliegt, und durch die Tunnelstrukturen (106) und den fluchtenden Übergang hindurch ein Armierungselement (141, 142) eingeführt und in diesem Zustand befestigt ist.

5. Verfahren nach Anspruch 4,
wobei mindestens ein Armierungselement (141) als eine mit einem Gewinde versehene Stange (120) ausgebildet ist und/oder mindestens ein Armierungselement (142) als ein Hohlprofil (130) ausgebildet ist.

6. Verfahren nach einem der Ansprüche 1 bis 5,
wobei der Kern (100) in mindestens einer Dimension einen Durchmesser von 2 Metern oder mehr umfasst und/oder ein Volumen von 4000 Litern oder mehr aufweist und/oder wobei das Bauteil (1) im Stahlguss ein Gewicht von mindestens 1 Tonne aufweist.

7. Verfahren nach einem der Ansprüche 1 bis 6,
wobei das Zentralelement (110) und die Randelemente (112) derart ausgebildet sind, dass an einer jeweiligen Schnittstelle (105) zwischen dem Zentralelement (110) und einem jeweiligen Randelement (112) eine nach außen zugängliche Verbindungs-Ausnehmung (101) angeordnet ist; wobei an jeder Schnittstelle (105) ein jeweiliges erstes Armierungselement (141) in eine Tunnelstruktur (106) des Zentralelements (110) eingeführt wird und ein jeweiliges zweites Armierungselement (142) in eine Tunnelstruktur (106) des zugehörigen Randelements (112) eingeführt wird; und wobei das erste und das zweite Armierungselement (141, 142) in der Verbindungs-Ausnehmung (101) miteinander verbunden, insbesondere verschweißt, werden.

8. Verfahren nach Anspruch 7,
wobei nach dem Verbinden der Armierungselemente (141, 142) die Tunnelstrukturen, und optional Hohlräume innerhalb der Armierungselemente (141, 142), mit einem Formstoff aufgefüllt werden.

9. Verfahren nach Anspruch 7 oder 8,
wobei das jeweilige erste Armierungselement (141) an einem von der Ausnehmung (101) abgewandten Ende an einem in einem Gussform-Unterteil (50) angeordneten Armierungs-Befestigungselement (51) fixiert wird.

10. Verfahren nach einem der Ansprüche 1 bis 9,
wobei das Bereitstellen (S100) der Kernelemente (110, 112) eine additive Fertigung (S60), insbesondere durch 3D-Sanddruck, der einzelnen Kernelemente (110, 112) umfasst.

11. Verfahren nach Anspruch 10,
wobei das Bereitstellen (S100) der Kernelemente (110, 112) weiterhin umfasst:
- Bereitstellen (S10) eines 3D-Modells des Kerns (5);
- Unterteilen (S20) des 3D-Modells des Kerns (5) in mehrere 3D-Einzelmodelle, umfassend:
- Bestimmen eines Wurzelelementmodells (10), welches einen räumlich zentralen Bereich des 3D-Modells des Kerns (5) enthält und welches zumindest einen Teil des Zentralelements (100) darstellt;
- Bestimmen einer Mehrzahl von Randelementmodellen (12-i), welche die Randelemente (112) darstellen;
- Anpassen (S30, S40, S50) des bestimmten Wurzelelementmodells (10) und eines der Randelementmodelle (12-i) derart, dass ein physisches Zusammensetzen des angepassten Wurzelelementmodells (11), des angepassten Randelementmodells (13) und der restlichen Randelementmodelle (12-i) ermöglicht wird und dass durch Zusammensetzen der restlichen Randelementmodelle (12-i), des angepassten Randelementmodells (13), und des angepassten Wurzelmodells (11) das 3D-Modell des Kerns (5) entsteht, wobei das angepasste Wurzelelementmodell (11) das Zentralelement (110) darstellt; und
- Additives Fertigen (S60) der Kernelemente (110, 112), und zwar des Zentralelements (110) anhand des angepassten Wurzelelementmodells (11) sowie der Randelemente (112) anhand des angepassten Randelementmodells (13) sowie der restlichen Randelementmodelle (12-i).

12. Verfahren nach Anspruch 11,
wobei das Wurzelelementmodell (10) derart bestimmt wird, dass es eine Symmetrie, insbesondere eine Drehsymmetrie, aufweist, und das Anpassen des Wurzelelementmodells (10) diese Symmetrie zumindest teilweise bricht.

13. Verfahren nacheinem der Ansprüche 1 bis 12,
wobei diejenigen Randelemente (112), welche von Randelementmodellen (12-i) dargestellt werden, welche dieselbe Form aufweisen, zum Herstellen des Kerns (100) zueinander symmetrisch bezüglich eines Symmetriezentrums, insbesondere einer Drehsymmetrieachse, des Wurzelelementmodells (10), aus welchem das Zentralelement (110) durch Anpassen hervorgegangen ist, angeordnet und in dieser Anordnung mit dem Zentralelement (110) verbunden werden.

14. Verfahren zum Herstellen eines - insbesondere großformatigen - Bauteils (1) in einem Gussverfahren, umfassend:
Herstellen (S100-S200) eines Kerns (100) einer Gussform in einem Verfahren nach einem der Ansprüche 1 bis 13;
Herstellen (S300) der Gussform unter Verwendung des Kerns (100); und
Herstellen (S400) des Bauteils (1) in einem Gussverfahren unter Verwendung der hergestellten Gussform.

15. Kern (100) für eine Gussform, umfassend:
- ein Zentralelement (110), welches einen räumlich zentralen Bereich des Kerns (100) enthält; und
- mehrere Randelemente (112), welche an dem Zentralelement (110) angeordnet und mit dem Zentralelement (110) verbunden sind,
wobei die Kernelemente (110, 112) zumindest teilweise Tunnelstrukturen (106) aufweisen, die zumindest teilweise an Schnittstellen (105) zwischen zwei Kernelementen (110, 112) miteinander derart korrespondieren, dass eine jeweilige Armierungsstruktur (140) aus mindestens einem Armierungselement (141, 142) über die jeweilige Schnittstelle (105) hinweg in den Tunnelstrukturen (106) anordenbar ist; und
wobei mindestens eine Armierungsstruktur (140) in miteinander korrespondierenden Tunnelstrukturen (106) von mindestens zwei Kernelementen (110, 112) angeordnet ist.

16. Computerprogrammprodukt (200), umfassend:
- ein 3D-Modell eines Kerns (5) einer Gussform, welches mehrere 3D-Einzelmodelle (11, 12-i, 13) aufweist, welche jeweils ein Kernelement (110, 112) darstellen, umfassend:
- ein Zentralelementmodell (11), welches ein Zentralelement (110) darstellt, welches einen räumlich zentralen Bereich des Kerns (100) enthält; und
- mehrere Randelementmodelle (12-i, 13), welche Randelemente (112) darstellen, welche dazu ausgelegt sind, an dem Zentralelement (110) angeordnet und mit dem Zentralelement (110) verbunden zu werden,
wobei die 3D-Einzelmodelle (11, 12-i, 13) derart gestaltet sind, dass das Zentralelementmodell (11) und/oder die Randelementmodelle (12-i, 13) zumindest teilweise Tunnelstrukturen (106) aufweisen, die zumindest teilweise an Schnittstellen (105) zwischen zwei 3D-Einzelmodellen (11, 12-i, 13) miteinander derart korrespondieren, dass eine jeweilige Armierungsstruktur (140) aus mindestens einem Armierungselement (141, 142) in die Tunnelstrukturen (106) von an der jeweiligen Schnittstelle (105) anliegenden, gemäß den 3D-Einzelmodellen (11, 12-i, 13) hergestellten Kernelementen (110, 112) über die jeweilige Schnittstelle (105) hinweg anordenbar ist; und
- Steueranweisungen zum Steuern einer additiven Fertigungseinrichtung zum Fertigen des Zentralelements (110) und der Randelemente (112) gemäß dem 3D-Einzelmodellen (11, 12-i, 13).
